# EUROPEAN PATENT SPECIFICATION

(11) **EP 4 443 024 B1**
(45) Date of publication and mention of the grant of the patent: **07.10.2026**
(21) Application number: 23780233.5
(22) Date of filing: 24.03.2023
(51) Int. Cl.: F16H 57/02, F16H 1/06, H02K 7/116, B60K 1/00

(54) **VEHICLE DRIVE DEVICE**
FAHRZEUGANTRIEBSVORRICHTUNG
DISPOSITIF D'ENTRAÎNEMENT DE VÉHICULE

(30) Priority: 30.03.2022 JP 2022055142
(43) Date of publication of application: 09.10.2024
(73) Proprietor: AISIN CORPORATION, Kariya-shi, Aichi 448-8650 (JP)
(72) Inventor: KONDO, Shinji, Kariya-shi, Aichi 448-8650 (JP)
(74) Representative: Kramer Barske Schmidtchen Patentanwälte PartG mbB
(86) International application number: PCT/JP2023/011962
(87) International publication number: WO 2023/190223

(56) References cited:
- WO-A1-2013/081121
- JP-A- 2019 094 932
- JP-A- 2020 198 675
- JP-A- 2021 112 116
- JP-A- 2021 131 097
- US-B2- 11 114 921

## Description

### TECHNICAL FIELD

This technology relates to a vehicle drive device including a rotary electric machine.

### BACKGROUND ART

Hitherto, vehicle drive devices including rotary electric machines and applied to electric vehicles and hybrid vehicles have become widespread. In such a vehicle drive device, it is desirable to downsize a case to improve ease of mounting on a vehicle. To downsize the case, such a vehicle drive device has been developed that a first axis on which a rotary electric machine is mounted and a third axis on which a differential device is mounted are brought closer to each other (see Patent Document 1). In this vehicle drive device, the stator of the rotary electric machine and the differential device are disposed so as not to overlap each other in an axial direction when viewed in a radial direction, and the first axis and the third axis are brought closer to each other so that the stator and the differential device do not interfere with each other.

### Related Art Documents

### Patent Documents

Patent Document 1: Japanese Unexamined Patent Application Publication No. 2019-94932 (JP 2019-94932 A)

### SUMMARY OF THE INVENTION

### Problem to be Solved by the Invention

In the configuration described in Patent Document 1, however, the rotary electric machine and the differential device are disposed widely in the axial direction. Therefore, the differential device is located on one of the right and left sides. In this state, the lengths of drive shafts may be uneven on the right and left sides. When the right and left drive shafts have different lengths, the drivability of the vehicle deteriorates. As a countermeasure, it is necessary to add an output shaft to adjust the right and left lengths. In this case, however, the costs increase.

Therefore, an object of the present disclosure is to provide a vehicle drive device that can be downsized while suppressing an increase in costs.

### Means for Solving the Problem

This object is achieved by a vehicle drive device including the features of claim 1. Further developments of the invention are recited in the dependent claims.

Thus, downsizing can be achieved while suppressing the increase in costs.

### BRIEF DESCRIPTION OF THE DRAWINGS

[FIG. 1] FIG. 1 is a sectional view showing a vehicle drive device according to an embodiment.
[FIG. 2] FIG. 2 is a sectional view showing a state cut along line A-A in FIG. 1.
[FIG. 3] FIG. 3 is a sectional view showing a state cut along line B-B in FIG. 1.

### MODES FOR CARRYING OUT THE INVENTION

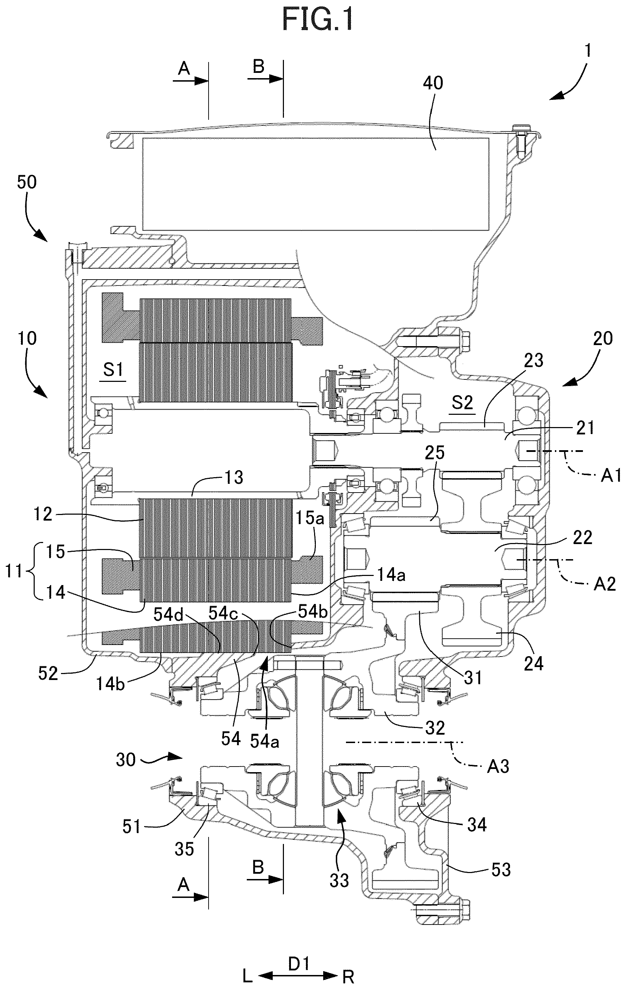

An embodiment of the present invention will be described in detail below with reference to FIGS. 1 to 3. The present embodiment illustrates a case where a vehicle drive device 1 is applied to a front-wheel drive electric vehicle. The vehicle drive device 1 will be outlined with reference to FIG. 1. The vehicle drive device 1 includes a motor 10 as a rotary electric machine, a speed reduction mechanism 20 as a power transmission mechanism, a differential device 30, an inverter 40, and a case 50 that houses these components. In the present embodiment, a width direction of the vehicle including the vehicle drive device 1, that is, a direction of an axis of a rotary shaft of the motor 10 or the differential device 30, is defined as "axial direction D1", a right side in FIG. 1 is denoted as "R", and a left side in FIG. 1 is denoted as "L". A phrase "drivingly connected" refers to a state in which rotary elements are connected so that a driving force can be transmitted therebetween, and is used as a concept including a state in which the rotary elements are connected so as to rotate integrally or a state in which the rotary elements are connected via a clutch etc. so that a driving force can be transmitted therebetween.

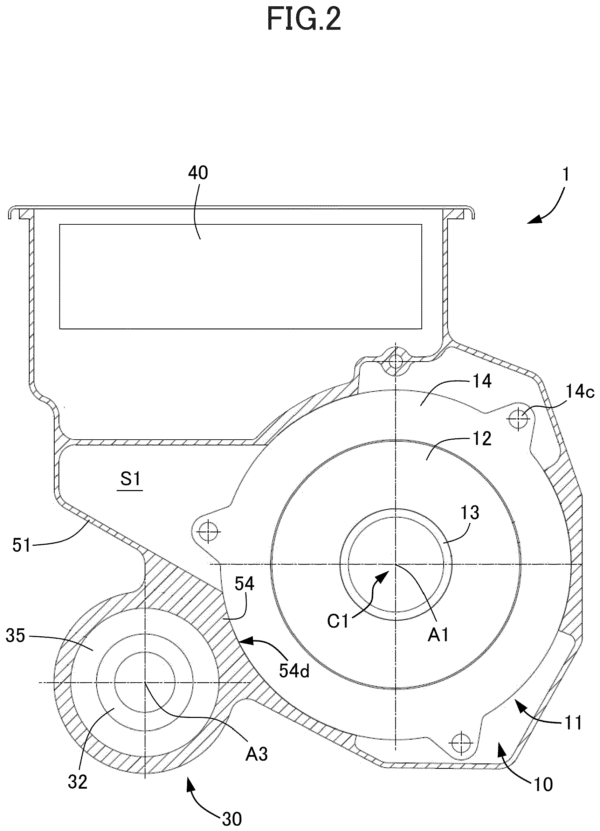

The motor 10 includes a stator 11 fixed to the case 50, a rotor 12 rotatably provided on an inner peripheral side of the stator 11, and a rotor shaft 13 that rotatably supports the rotor 12. The stator 11 includes a stator core 14 and a coil 15 wound around the stator core 14. Both ends of the coil 15 in the axial direction D1 form coil ends 15a that protrude on both sides from the stator core 14. The stator core 14 has bolt fixing holes 14c (see FIG. 2) that are open along the axial direction D1 on the outer peripheral portion. In the present embodiment, the bolt fixing holes 14c are formed at three locations equidistant from a rotation center C1 (see FIG. 2) of the rotor 12 and at a pitch of substantially 120 degrees in a circumferential direction. The stator core 14 is fixed to a case body 51 by, for example, passing bolts through the bolt fixing holes 14c and fastening them from the left side L to the right side R. The inverter 40 is connected to the motor 10, and electric power supplied from a battery (not shown) is supplied to the motor 10 via the inverter 40 to drive the motor 10.

The speed reduction mechanism 20 includes a first rotary shaft 21 provided coaxially with a first axis A1, a second rotary shaft 22 provided coaxially with a second axis A2 that is parallel to the first axis A1 and extends at a different position from that of the first axis A1, a first gear 23 fixed on the first axis A1, and a second gear 24 and a third gear 25 fixed on the second axis A2. The first rotary shaft 21 is integrated with the rotor shaft 13. That is, the speed reduction mechanism 20 is drivingly connected to the rotor 12. The second gear 24 has a larger diameter than the first gear 23 and meshes with the first gear 23. The third gear 25 has a smaller diameter than a differential ring gear 31 described later and meshes with the differential ring gear 31. Therefore, the speed of rotation of the rotor 12 is reduced via the first rotary shaft 21 and the second rotary shaft 22 of the speed reduction mechanism 20, and the rotation is transmitted to the differential device 30. In the present embodiment, the speed reduction mechanism 20 is disposed on the right side R that is one axial side of the motor 10, and the third gear 25 is disposed on the left side L that is the other axial side of the second gear 24.

The differential device 30 is provided coaxially with a third axis A3 that is parallel to the first axis A1 and the second axis A2 and extends at a different position from those of the first axis A1 and the second axis A2. The differential device 30 includes the differential ring gear 31 drivingly connected to the third gear 25 of the speed reduction mechanism 20, a differential case 32 integrated with the differential ring gear 31, and a differential mechanism 33 contained in the differential case 32. The differential mechanism 33 absorbs a difference in rotation between right and left drive shafts attached thereto. The differential mechanism 33 is disposed at a position where the center in the axial direction D1 overlaps the motor 10 in the axial direction D1 when viewed in a radial direction. Since a known appropriate mechanism can be applied to the differential mechanism 33, detailed description thereof will be omitted.

The end of the differential case 32 on the right side R is rotatably supported on the case 50 by a bearing 34, and the end of the differential case 32 on the left side L is rotatably supported on the case 50 by a bearing 35. That is, the vehicle drive device 1 includes two bearings 34, 35 that support both ends of the differential case 32 in the axial direction D1 so that the differential case 32 is rotatable relative to the case 50. Of the two bearings 34, 35, the bearing 34 on the right side R is disposed at a position where the bearing 34 overlaps the differential ring gear 31 in the axial direction D1 when viewed in the radial direction.

The case 50 includes the case body 51 that houses the motor 10, the speed reduction mechanism 20, and the differential device 30, a first cover 52 that closes the left side L of a first space S1 that houses the motor 10, and a second cover 53 that closes the right side R of a second space S2 that houses the differential device 30. The case body 51 includes a partition wall 54 disposed between the motor 10 and the differential device 30 (see FIG. 2).

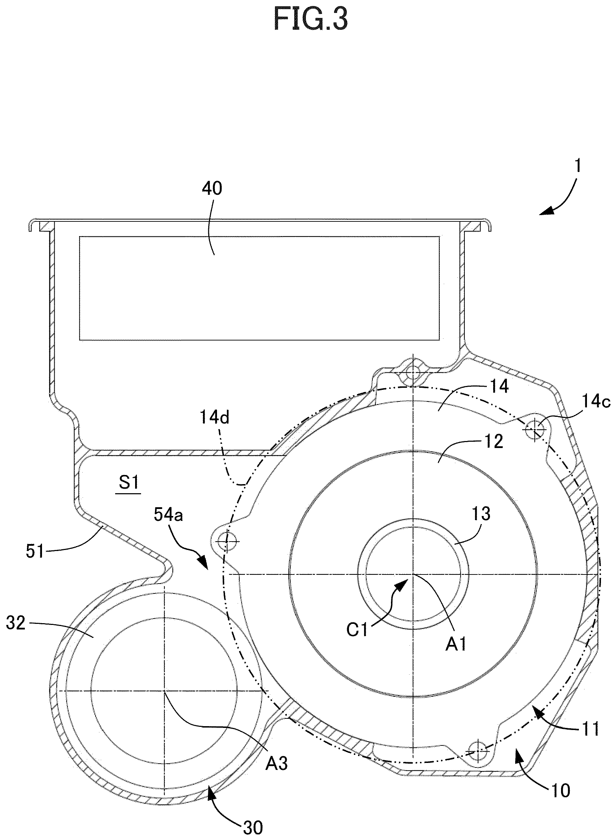

The partition wall 54 has an opening 54a at a portion where the distance between the stator core 14 and the differential device 30 is shortest so that part of the stator core 14 is exposed on the differential device side (see FIG. 3). The opening 54a has, for example, a circular, elliptical, rectangular, or notched shape to pass through the partition wall 54. The opening 54a is formed at the same time as the case body 51 is cast, but the present disclosure is not limited to this. The opening 54a may be formed by actually cutting out the case body 51 after it is cast.

The portion where the distance between the stator core 14 and the differential device 30 is shortest is, for example, the shortest distance connecting a portion on the differential device 30 side in the radial direction on a stator core end face 14a (second end face) of the stator core 14 on the differential device 30 side in the axial direction D1 and the differential device 30 facing that portion. Alternatively, it may be the shortest distance connecting the end of an outer peripheral surface 14b of the stator core 14 on the differential device 30 side in the axial direction D1 and the differential device 30 facing that end. Therefore, the stator core 14 and the differential device 30 directly face each other via the opening 54a, and the stator core 14 and the differential device 30 can be brought into close proximity in the radial direction without being shifted in the axial direction D1. Thus, the vehicle drive device 1 can be downsized.

In the present embodiment, as shown in FIG. 3, at the portion where the distance between the stator core 14 and the differential device 30 is shortest, the differential device 30 is disposed to overlap an imaginary circle 14d passing through the centers of the bolt fixing holes 14c about the rotation center C1 (first axis A1) of the rotor 12 when the stator core 14 is viewed in the axial direction D1. Therefore, the stator core 14 and the differential device 30 can be brought into close proximity in the radial direction. Thus, the vehicle drive device 1 can be downsized.

The opening 54a includes an opening end face 54b (first end face) oriented to the left side L at the end on the right side R. The stator core end face 14a of the stator core 14 on the right side R is disposed in close contact with the opening end face 54b in the axial direction D1. The stator core 14 is fastened to the case body 51 with bolts to the right side R. However, the stator core end face 14a and the opening end face 54b are not pressed strongly against each other, but are in close contact with each other. Thus, foreign matter contained in lubricating oil scooped up by the differential case 32 can be prevented from directly coming into contact with the coil ends 15a having low strength through a space between the stator core 14 and the opening end face 54b.

As the size of the opening 54a increases, it is easier to avoid interference with the differential case 32. When the size is excessively large, however, the support force for supporting the stator core 14 when it is deformed as one of the original functions of the partition wall 54 decreases. Therefore, the size of the opening 54a is, for example, at least about 3 mm in the axial direction D1, and at most from the stator core end face 14a to the center of the stator core 14 in the axial direction D1. That is, it is preferable that an end 54c of the opening 54a on the left side L be positioned on the right side R of the center of the stator core 14 in the axial direction D1. In the present embodiment, the opening 54a is provided with approximately a quarter of the length of the stator core 14 from the stator core end face 14a in the axial direction D1. The size and position of the opening 54a are not limited to them, and can be set as appropriate depending on the distance between the stator core 14 and the differential case 32 and the position in the axial direction D1.

A surface 54d on the motor 10 side for the partition wall 54 on the left side L of the opening 54a faces the outer peripheral surface 14b of the stator core 14. A slight clearance is secured between the surface 54d and the outer peripheral surface 14b. Therefore, the stator core 14 is supported by the partition wall 54 even when the stator core 14 vibrates due to the drive of the vehicle drive device 1. Since the clearance is secured between the surface 54d and the outer peripheral surface 14b, foreign matter contained in the lubricating oil scooped up by the differential case 32 will not directly come into contact with the coil ends 15a. Thus, no problem will occur.

As described above, the vehicle drive device 1 of the present embodiment has the opening 54a at the portion where the distance between the stator core 14 and the differential device 30 is shortest so that part of the stator core 14 is exposed on the differential device 30 side. Therefore, the stator core 14 and the differential device 30 can be brought into close proximity in the radial direction without being shifted in the axial direction D1. Without the shift in the axial direction D1, the differential device 30 can be disposed at the center in the lateral direction. Thus, the drivability of the vehicle can be secured without causing an increase in costs due to addition of an output shaft. Accordingly, the vehicle drive device 1 can be downsized while suppressing the increase in costs.

In the vehicle drive device 1 of the present embodiment, the stator core end face 14a of the stator core 14 is disposed in close contact with the opening end face 54b in the axial direction D1. Thus, foreign matter contained in the lubricating oil scooped up by the differential case 32 can be prevented from directly coming into contact with the coil ends 15a.

In the vehicle drive device 1 of the present embodiment, the end 54c of the opening 54a on the left side L is positioned on the right side R of the center of the stator core 14 in the axial direction D1. Thus, when the stator is deformed due to vibration etc., the partition wall 54 can support the stator so as not to cause deformation.

In the vehicle drive device 1 of the present embodiment, the differential mechanism 33 of the differential device 30 is disposed at the position where the center in the axial direction D1 overlaps the motor 10 in the axial direction D1 when viewed in the radial direction. Therefore, the differential device 30 can easily be disposed at the center in the axial direction D1.

In the vehicle drive device 1 of the present embodiment, the third gear 25 of the speed reduction mechanism 20 is disposed on the left side L of the second gear 24, that is, on the differential device 30 side, and the third gear 25 meshes with the differential ring gear 31. Therefore, the differential device 30 can easily be disposed at the center in the axial direction D1 without an increase in the length of the speed reduction mechanism 20 in the axial direction D1.

In the vehicle drive device 1 of the present embodiment, the bearing 34 on the right side R of the differential case 32 is disposed at the position where the bearing 34 overlaps the differential ring gear 31 in the axial direction D1 when viewed in the radial direction. Therefore, the vehicle drive device 1 can be downsized.

Although the description has been given of the case where the vehicle drive device 1 of the present embodiment is applied to a front-wheel drive electric vehicle, the present disclosure is not limited to this. For example, the vehicle drive device 1 may be applied to a rear-wheel drive electric vehicle or to a hybrid vehicle.

### [Summary of Invention]

With the configuration of claim 1, the stator core (14) and the differential device (30) can be brought into close proximity in the radial direction without being shifted in the axial direction (D1). Without the shift in the axial direction (D1), the differential device (30) can be disposed at the center in the lateral direction. Thus, the drivability of the vehicle can be secured without causing an increase in costs due to addition of an output shaft. Accordingly, the vehicle drive device (1) can be downsized while suppressing the increase in costs.

With the configuration of claim 2, the stator core (14) and the differential device (30) can be brought into close proximity in the radial direction. Thus, the vehicle drive device (1) can further be downsized.

With the configuration of claim 3, foreign matter contained in lubricating oil scooped up by the differential case (32) can be prevented from directly coming into contact with the coil ends (15a).

With the configuration of claim 4, when the stator (11) is deformed due to vibration etc., the partition wall (54) can support the stator so as not to cause deformation.

With the configuration of claim 5, the differential device (30) can easily be disposed at the center in the axial direction (D1).

With the configuration of claim 6, the vehicle drive device (1) can further be downsized.

### INDUSTRIAL APPLICABILITY

The vehicle drive device according to the present disclosure is industrially applicable as a vehicle drive device including a rotary electric machine mounted on a vehicle such as an automobile.

### Description of the Reference Numerals

1 ... vehicle drive device, 10 ... motor (rotary electric machine), 11 ... stator, 12 ... rotor, 14 ... stator core, 14a ... stator core end face (second end face), 14c ... bolt fixing hole, 14d ... imaginary circle, 15a ... coil end, 20 ... speed reduction mechanism (power transmission mechanism), 21 ... first rotary shaft, 22 ... second rotary shaft, 23 ... first gear, 24 ... second gear, 25 ... third gear, 30 ... differential device, 31 ... differential ring gear, 32 ... differential case, 33 ... differential mechanism, 34, 35 ... bearing, 50 ... case, 54 ... partition wall, 54a ... opening, 54b ... opening end face (first end face), 54c ... end, D1 ... axial direction, L ... left side (other axial side), R ... right side (one axial side)

## Claims

1. A vehicle drive device (1) comprising:
a rotary electric machine (10) including a stator (11) including a stator core (14) and coil ends (15a) that protrude from the stator core (14) on both sides in an axial direction (D1), and a rotor (12) provided so as to be rotatable relative to the stator (11);
a power transmission mechanism (20) drivingly connected to the rotor (12);
a differential device (30) including a differential ring gear (31) drivingly connected to the power transmission mechanism (20), a differential case (32) integrated with the differential ring gear (31), and a differential mechanism (33) contained in the differential case (32); and
a case (50) that houses the rotary electric machine (10), the power transmission mechanism (20), and the differential device (30), **characterized in that**
the case (50) includes a partition wall (54) disposed between the rotary electric machine (10) and the differential device (30), and
the partition wall (54) has an opening (54a) at a portion where a distance between the stator core (14) and the differential device (30) is shortest so that part of the stator core (14) is exposed on the differential device (30) side.

2. The vehicle drive device (1) according to claim 1, wherein:
the stator core (14) has bolt fixing holes (14c) that are open along the axial direction (D1) on an outer peripheral portion; and
at the portion where the distance between the stator core (14) and the differential device (30) is shortest, the differential device (30) is disposed to overlap an imaginary circle (14d) passing through centers of the bolt fixing holes (14c) about a rotation center of the rotor (12) when the stator core (14) is viewed in the axial direction (D1).

3. The vehicle drive device (1) according to claim 1 or 2, wherein:
the power transmission mechanism (20) is disposed on one axial side (R) of the rotary electric machine (10);
the opening (54a) has a first end face (54b) oriented to the other axial side (L) at an end on the one axial side (R); and
a second end face (14a) of the stator core (14) on the one axial side (R) is disposed in close contact with the first end face (54b) in the axial direction (D1).

4. The vehicle drive device (1) according to claim 3, wherein an end (54c) of the opening (54a) on the other axial side (L) is positioned on the one axial side (R) of a center of the stator core (14) in the axial direction (D1).

5. The vehicle drive device (1) according to any one of claims 1 to 4, wherein:
the power transmission mechanism (20) is a speed reduction mechanism (20) including a first rotary shaft (21) disposed on one axial side (R) of the rotary electric machine (10) and drivingly connected to the rotor (12), a first gear (23) fixed to the first rotary shaft (21), a second rotary shaft (22) disposed parallel to the first rotary shaft (21), a second gear (24) fixed to the second rotary shaft (22), having a larger diameter than the first gear (23), and meshing with the first gear (23), and a third gear (25) fixed to the second rotary shaft (22), disposed on the other axial side (L) of the second gear (24), having a smaller diameter than the differential ring gear (31), and meshing with the differential ring gear (31); and
the differential mechanism (33) is disposed at a position where a center in the axial direction (D1) overlaps the rotary electric machine (10) in the axial direction (D1) when viewed in a radial direction.

6. The vehicle drive device (1) according to claim 5, further comprising two bearings (34, 35) that support both ends of the differential case (32) in the axial direction (D1) so that the differential case (32) is rotatable relative to the case (50), wherein of the two bearings (34, 35), the bearing (34) on the one axial side (R) is disposed at a position where the bearing (34) overlaps the differential ring gear (31) in the axial direction (D1) when viewed in the radial direction.

## Patentansprüche

1. Fahrzeugantriebsvorrichtung (1), aufweisend:
eine rotierende elektrische Maschine (10), die einen Stator (11) mit einem Statorkern (14) und Spulenenden (15a), die von dem Statorkern (14) auf beiden Seiten in einer axialen Richtung (D1) vorstehen, und einen Rotor (12) aufweist, der so vorgesehen ist, dass er relativ zum Stator (11) drehbar ist;
einen Kraftübertragungsmechanismus (20), der antriebsmäßig mit dem Rotor (12) verbunden ist;
eine Differenzialvorrichtung (30), die einen Differenzialzahnkranz (31), der antriebsmäßig mit dem Kraftübertragungsmechanismus (20) verbunden ist, ein Differenzialgehäuse (32), das mit dem Differenzialzahnkranz (31) integriert ist, und einen Differenzialmechanismus (33) aufweist, der in dem Differenzialgehäuse (32) enthalten ist; und
ein Gehäuse (50), das die rotierende elektrische Maschine (10), den Kraftübertragungsmechanismus (20) und die Differenzialvorrichtung (30) aufnimmt, **dadurch gekennzeichnet, dass**
das Gehäuse (50) eine Trennwand (54) aufweist, die zwischen der rotierenden elektrischen Maschine (10) und der Differenzialvorrichtung (30) angeordnet ist, und
die Trennwand (54) eine Öffnung (54a) an einem Abschnitt aufweist, an dem ein Abstand zwischen dem Statorkern (14) und der Differenzialvorrichtung (30) am kleinsten ist, so dass ein Teil des Statorkerns (14) auf der Seite der Differenzialvorrichtung (30) freiliegt.

2. Fahrzeugantriebsvorrichtung (1) nach Anspruch 1, wobei:
der Statorkern (14) Bolzenbefestigungslöcher (14c) aufweist, die an einem Außenumfangsabschnitt in axialer Richtung (D1) offen sind; und
an dem Abschnitt, an dem der Abstand zwischen dem Statorkern (14) und der Differenzialvorrichtung (30) am kleinsten ist, die Differenzialvorrichtung (30) bei Betrachtung des Statorkerns (14) in der axialen Richtung (D1) so angeordnet ist, dass sie einen gedachten Kreis (14d) überlappt, der durch Mitten der Bolzenbefestigungslöcher (14c) um ein Drehzentrum des Rotors (12) verläuft.

3. Fahrzeugantriebsvorrichtung (1) nach Anspruch 1 oder 2, wobei:
der Kraftübertragungsmechanismus (20) auf einer axialen Seite (R) der rotierenden elektrischen Maschine (10) angeordnet ist;
die Öffnung (54a) eine erste Endfläche (54b) aufweist, die an einem Ende auf der einen axialen Seite (R) zu der anderen axialen Seite (L) hin ausgerichtet ist; und
eine zweite Endfläche (14a) des Statorkerns (14) auf der einen axialen Seite (R) in der axialen Richtung (D1) in engem Kontakt mit der ersten Endfläche (54b) angeordnet ist.

4. Fahrzeugantriebsvorrichtung (1) nach Anspruch 3, wobei ein Ende (54c) der Öffnung (54a) auf der anderen axialen Seite (L) auf der einen axialen Seite (R) einer Mitte des Statorkerns (14) in der axialen Richtung (D1) positioniert ist.

5. Fahrzeugantriebsvorrichtung (1) nach einem der Ansprüche 1 bis 4, wobei:
der Kraftübertragungsmechanismus (20) ein Untersetzungsmechanismus (20) ist, der eine erste Drehwelle (21), die auf einer axialen Seite (R) der rotierenden elektrischen Maschine (10) angeordnet und antriebsmäßig mit dem Rotor (12) verbunden ist, ein erstes Zahnrad (23), das an der ersten Drehwelle (21) befestigt ist, eine zweite Drehwelle (22), die parallel zur ersten Drehwelle (21) angeordnet ist, ein zweites Zahnrad (24), das an der zweiten Drehwelle (22) befestigt ist, einen größeren Durchmesser als das erste Zahnrad (23) aufweist und mit dem ersten Zahnrad (23) kämmt, und ein drittes Zahnrad (25) aufweist, das an der zweiten Drehwelle (22) befestigt ist, auf der anderen axialen Seite (L) des zweiten Zahnrads (24) angeordnet ist, einen kleineren Durchmesser als der Differenzialzahnkranz (31) aufweist und mit dem Differenzialzahnkranz (31) kämmt; und
der Differenzialmechanismus (33) an einer Position angeordnet ist, an der bei Betrachtung in einer radialen Richtung eine Mitte in der axialen Richtung (D1) die rotierende elektrische Maschine (10) in der axialen Richtung (D1) überlappt.

6. Fahrzeugantriebsvorrichtung (1) nach Anspruch 5, ferner aufweisend zwei Lager (34, 35), die beide Enden des Differenzialgehäuses (32) in der axialen Richtung (D1) so stützen, dass das Differenzialgehäuse (32) relativ zum Gehäuse (50) drehbar ist, wobei von den beiden Lagern (34, 35) das Lager (34) auf der einen axialen Seite (R) an einer Position angeordnet ist, an der das Lager (34) bei Betrachtung in der radialen Richtung den Differenzialzahnkranz (31) in der axialen Richtung (D1) überlappt.

## Revendications

1. Un dispositif d'entraînement de véhicule (1) comprenant :
une machine électrique tournante (10) comprenant un stator (11) comprenant un noyau de stator (14) et des extrémités de bobine (15a) qui font saillie depuis le noyau de stator (14) des deux côtés dans une direction axiale (D1), et un rotor (12) prévu de manière à pouvoir tourner par rapport au stator (11) ;
un mécanisme de transmission de puissance (20) relié en entraînement au rotor (12) ;
un dispositif différentiel (30) comprenant une couronne dentée de différentiel (31) reliée en entraînement au mécanisme de transmission de puissance (20), un boîtier de différentiel (32) intégré à la couronne dentée de différentiel (31), et un mécanisme différentiel (33) contenu dans le boîtier de différentiel (32) ; et
un carter (50) qui loge la machine électrique tournante (10), le mécanisme de transmission de puissance (20) et le dispositif différentiel (30), **caractérisé en ce que**
le carter (50) inclut une paroi de séparation (54) disposée entre la machine électrique tournante (10) et le dispositif différentiel (30), et
la paroi de séparation (54) présente une ouverture (54a) au niveau d'une partie où une distance entre le noyau de stator (14) et le dispositif différentiel (30) est la plus courte de sorte qu'une partie du noyau de stator (14) est exposée du côté du dispositif différentiel (30).

2. Le dispositif d'entraînement de véhicule (1) selon la revendication 1, dans lequel :
le noyau de stator (14) présente des trous de fixation pour boulons (14c) qui débouchent le long de la direction axiale (D1) sur une partie périphérique extérieure ; et
au niveau de la partie où la distance entre le noyau de stator (14) et le dispositif différentiel (30) est la plus courte, le dispositif différentiel (30) est disposé de manière à chevaucher un cercle imaginaire (14d) passant par les centres des trous de fixation pour boulons (14c) autour d'un centre de rotation du rotor (12) lorsque le noyau de stator (14) est vu dans la direction axiale (D1).

3. Le dispositif d'entraînement de véhicule (1) selon la revendication 1 ou 2, dans lequel :
le mécanisme de transmission de puissance (20) est disposé sur un premier côté axial (R) de la machine électrique tournante (10) ;
l'ouverture (54a) présente une première face d'extrémité (54b) orientée vers l'autre côté axial à une extrémité sur le premier côté axial (R) ; et
une seconde face d'extrémité (14a) du noyau de stator (14) sur le premier côté axial (R) est disposée en contact étroit avec la première face d'extrémité (54b) dans la direction axiale (D1).

4. Le dispositif d'entraînement de véhicule (1) selon la revendication 3, dans lequel une extrémité (54c) de l'ouverture (54a) sur l'autre côté axial (L) est positionnée sur le premier côté axial (R) d'un centre du noyau de stator (14) dans la direction axiale (D1).

5. Le dispositif d'entraînement de véhicule (1) selon l'une quelconque des revendications 1 à 4, dans lequel :
le mécanisme de transmission de puissance (20) est un mécanisme de réduction de vitesse (20) comprenant un premier arbre tournant (21) disposé sur un premier côté axial (R) de la machine électrique tournante (10) et relié en entraînement au rotor (12), une première roue dentée (23) fixée au premier arbre tournant (21), un second arbre tournant (22) disposé parallèlement au premier arbre tournant (21), une deuxième roue dentée (24) fixée au second arbre tournant (22), ayant un diamètre plus grand que celui de la première roue dentée (23), et s'engrenant avec la première roue dentée (23), et une troisième roue dentée (25) fixée au second arbre tournant (22), disposée sur l'autre côté axial (L) de la deuxième roue dentée (24), ayant un diamètre plus petit que celui de la couronne dentée de différentiel (31), et s'engrenant avec la couronne dentée de différentiel (31) ; et
le mécanisme différentiel (33) est disposé à une position où un centre dans la direction axiale (D1) chevauche la machine électrique tournante (10) dans la direction axiale (D1) lorsqu'il est vu dans une direction radiale.

6. Le dispositif d'entraînement de véhicule (1) selon la revendication 5, comprenant en outre deux paliers (34, 35) qui supportent les deux extrémités du boîtier de différentiel (32) dans la direction axiale (D1) de sorte que le boîtier de différentiel (32) peut tourner par rapport au carter (50), dans lequel parmi les deux paliers (34, 35), le palier (34) sur le premier côté axial (R) est disposé à une position où le palier (34) chevauche la couronne dentée de différentiel (31) dans la direction axiale (D1) lorsqu'il est vu dans la direction radiale.
